# EUROPÄISCHE PATENTSCHRIFT

(11) **EP 1 141 981 B1**
(45) Veröffentlichungstag und Bekanntmachung des Hinweises auf die Patenterteilung: **14.05.2003**
(21) Anmeldenummer: 99955635.0
(22) Anmeldetag: 01.12.1999
(51) Int. Cl.: H01G 4/015

(54) **FOLIE FÜR EINEN FOLIENKONDENSATOR UND FOLIENKONDENSATOR**
FOIL FOR A FOIL CAPACITOR AND FOIL CAPACITOR
FILM POUR CONDENSATEUR ET CONDENSATEUR A FILM

(30) Priorität: 03.12.1998 DE 19856457
(43) Veröffentlichungstag der Anmeldung: 10.10.2001
(73) Patentinhaber: ABB RESEARCH LTD., 8050 Zürich (CH)
(72) Erfinder: CARLEN, Martin, CH-5443 Niederrohrdorf (CH); BRÜESCH, Peter, CH-5415 Nussbaumen (CH); WIESMANN, Hans-Jürg, CH-8607 Seegräben (CH)
(74) Vertreter: ABB Patent Attorneys
(86) Internationale Anmeldenummer: CH9900573
(87) Internationale Veröffentlichungsnummer: WO00033335

(56) Entgegenhaltungen:
- EP-A- 0 438 344
- EP-A- 0 813 213
- WO-A-94/19813
- WO-A-98/35368
- FR-A- 2 579 366

## Beschreibung

### Technisches Gebiet

Die Erfindung bezieht sich auf eine Folie für einen Folienkondensator, die aus einer elektrisch isolierenden Trägerfolie mit einer darauf aufgebrachten elektrisch leitenden Schicht ausgebildet ist, wobei die elektrisch leitende Schicht im Folienkondensator eine Elektrode und die Trägerfolie ein Dielektrikum bildet. Ferner bezieht sich die Erfindung auf einen mit einer solchen Folie ausgeführten Folienkondensator.

### Stand der Technik

Kondensatoren werden für einen weiten Kapazitätsbereich unter anderem als Folienkondensatoren hergestellt, wobei das Dielektrikum aus einer Kunststofffolie besteht. Die Elektroden sind aus zwei leitenden Metallflächen ausgebildet. Diese beiden Metallflächen bestehen entweder aus dünnen Metallfolien oder aus auf die Folien aufgedampften Metallschichten. Letztere Kondensatoren weisen einen Selbstheilungseffekt auf, d.h. bei einem elektrischen Durchschlag oder Durchbruch verdampft die Metallschicht in der Umgebung der Entladung oder an einer dafür vorgesehenen Steile in deren Nähe.. Hierdurch verkleinert sich der aktive Bereich, wobei der Kondensator weiterhin, wenn auch mit einer geringfügig verringerten Kapazität, verwendet werden kann.

In US5136462 und FR8911713 werden Folien für einen Folienkondensator beschrieben, die anstelle einer durchgehenden Metallbeschichtung eine in einzelne Segmente unterteilte Metallbeschichtung aufweisen. Die einzelnen Segmente haben einen geringen Flächenwiderstand, sie sind durch nichtleitende grabenartige Aussparungen voneinander getrennt und nur über schmale Strombrücken elektrisch miteinander verbunden. Diese schmalen Strombrücken dienen als Sicherungen, die bei einem elektrischen Durchschlag das betroffene Segment von den übrigen Segmenten trennen, so daß die durch einen elektrischen Durchschlag verursachte Beschädigung auf ein einziges oder nur wenige Segmente begrenzt ist. Ein Kondensator mit einer derart segmentierten Folie entspricht mehreren tausend einzelner, parallel geschalteter Kondensatoren.

Beim segmentierten Folienkondensator der EP 0 813 213 A1 sind die Aussparungen zwischen den Segmenten mit einer dünnen leitenden Schicht bedeckt. Diese dient der Vergrösserung der aktiven Fläche sowie der Vermeidung von Feldüberhöhungen an den Kanten zwischen Elektrodensegmenten und unbeschichteten Aussparungen. Die leitenden Aussparungen haben die Aufgabe, im Falle eines elektrischen Durchbruchs in einem Elektrodensegment die Impedanz in der Umgebung des Letzteren zu erhöhen und die Energiezufuhr zu unterbinden. Je grösser dabei der flächenmässige Anteil der dünnen leitenden Schicht gegenüber den Elektrodensegmenten gewählt wird, desto grösser wird der äquivalente Reihenwiderstand des Folienkondensators, wodurch die elektrischen Verluste und damit die Temperatur im Kondensator erhöht werden. Höhere Temperaturen im Kondensator verursachen aber eine Beschleunigung der Alterungserscheinungen.

Aus der WO 94/19813 ist ein Folienkondensator bekannt, der eine dielektrische Folie mit darauf aufgedampften, durchgehenden Elektroden aufweist. Die Elektroden sind mit Bedacht relativ dünn ausgebildet und besitzen einen entsprechend hohen Flächenwiderstand von 5 bis 300Ω. Dank des erhöhten Flächenwiderstandes wird eine gegenüber dem vorgängig beschriebenen segmentierten Folienkondensator verbesserte dielektrische Festigkeit rsp. gesteigerte Durchbruchsspannung erzielt.

### Darstellung der Erfindung

Der Erfindung liegt die Aufgabe zugrunde, eine Folie für einen Folienkondensator und einen mit der Folie versehenen Folienkondensator zu schaffen, welche nur geringfügig Alterungserscheinungen unterliegen.

Die Aufgabe wird durch eine Folie mit den Merkmalen des 1. Anspruchs gelöst. Vorteilhafte Ausgestaltungen der Erfindung sind in den Unteransprüchen gekennzeichnet.

Die Erfindung zeichnet sich dadurch aus, daß bei einer Kondensatorfolie mit einer elektrisch leitenden Schicht als Elektrode und einer auf der genannten Schicht aufgebrachten Strompfadstruktur der Flächenwiderstand der Schicht möglichst gross und derjenige der Strompfadstruktur möglichst klein gewählt wird. Die erstgenannte Massnahme hat einen verringerten Kapazitätsverlust im Falle eines Durchschlags zur Folge, und die zweite Massnahme führt zu einer Reduktion des Flächengesamtwiderstandes von Elektrode und Strompfadstruktur. Dadurch reduzieren sich die ohmschen Verluste der Kondensatorfolie und damit deren Erwärmung. Beide genannten Massnahmen wirken sich somit positiv auf die Alterungserscheinungen aus.

Die elektrisch leitende Schicht der erfindungsgemäßen Folie für einen Folienkondensator weist einen relativ hohen Flächenwiderstand auf. Dieser hohe Flächenwiderstand begrenzt bei einem elektrischen Durchschlag den Flächenbereich, an dem die elektrisch leitende Schicht verdampft, wodurch die wirksame Elektrodenfläche und damit die Kapazität des Kondensators nur geringfügig beeinträchtigt werden. Zusätzlich wird die Durchbruchsspannung gesteigert und beim Durchschlag lokal weniger elektrische Energie in Wärme umgesetzt. Durch das Vorsehen einer erfindungsgemäßen Strompfadstruktur in Form von Haupt- und Nebenstrompfaden wird ein gegenüber dem Flächenwiderstand der elektrisch leitenden Schicht verringerter Flächengesamtwiderstand geschaffen. Dieser verringerte Flächengesamtwiderstand reduziert die ohmschen Verluste bei Stromfluss im Kondensator und damit die Temperaturerhöhung im Kondensator und wirkt sich dadurch positiv auf dessen thermisch bedingte Alterung aus.

Die Strompfadstruktur besteht vorzugsweise aus dem gleichen oder aus einem anderen elektrisch leitfähigen Material wie die elektrisch leitende Schicht und weist eine über die elektrisch leitende Schicht erhabene Kontur auf. Die einzelnen, vorzugsweise streifenförmig ausgebildeten Strompfade untergliedern sich im Einzelnen in Haupt- und Nebenstrompfade und bilden streifenförmig ausgestaltete Elektrodenstrukturen.Vorteilhafterweise wird der Flächenwiderstand der Strompfadstruktur um mindestens einen Faktor 20 gegenüber demjenigen der elektrisch leitenden Schicht reduziert. Dies erlaubt eine flächenmässig geringe Überdeckung von weniger als 10% der Elektrodenschicht durch die Strompfadstruktur ohne Einbussen bei der angestrebten Flächengesamtwiderstandsreduktion. Je schmaler und/oder weniger dicht die Strompfade ausgeführt sind, desto geringer ist jedoch die Reduktion der selbstheilenden (hochohmigen) Elektrodenfläche der Kondensatorfolie. Durch den verringerten Flächengesamtwiderstand und die dünne Elektrodenschicht weist ein mit der erfindungsgemäßen Kondensatorfolie versehener Folienkondensator gute elektrische Eigenschaften bei optimalem Selbstheilungsverhalten auf, was eine gesteigerte Lebenserwartung zur Folge hat.

### Kurze Beschreibung der Zeichnungen

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen schematisch:
Fig. 1 bis 3 jeweils eine Draufsicht auf einen Bereich jeweils einer erfindungsgemäßen Kondensatorfolie und
Fig. 4 eine nicht-maßstabsgetreue Querschnittsdarstellung durch eine erfindungsgemäß ausgebildete Kondensatorfolie.

### Wege zur Ausführung der Erfindung

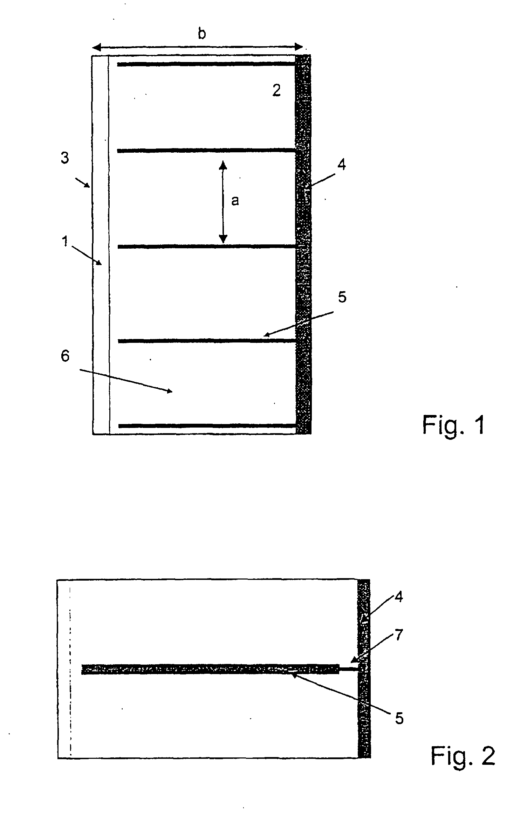

Fig. 1 zeigt ein erstes Ausführungsbeispiel einer erfindungsgemäßen Folie für einen Folienkondensator in der Draufsicht. Die Folie setzt sich aus einer Trägerfolie 1 und einer darauf aufgebrachten elektrisch leitenden Schicht 2 zusammen. Vorzugsweise ist die elektrisch leitende Schicht 2 als Metallschicht ausgebildet, jedoch eignet sich auch elektrisch leitender Kunststoff um diese Schicht zu bilden.

Die Trägerfolie 1 hingegen ist aus einem elektrisch isolierenden Kunststoffmaterial gefertigt. Es ist auch bekannt, eine Papierfolie als Trägermaterial zu verwenden.

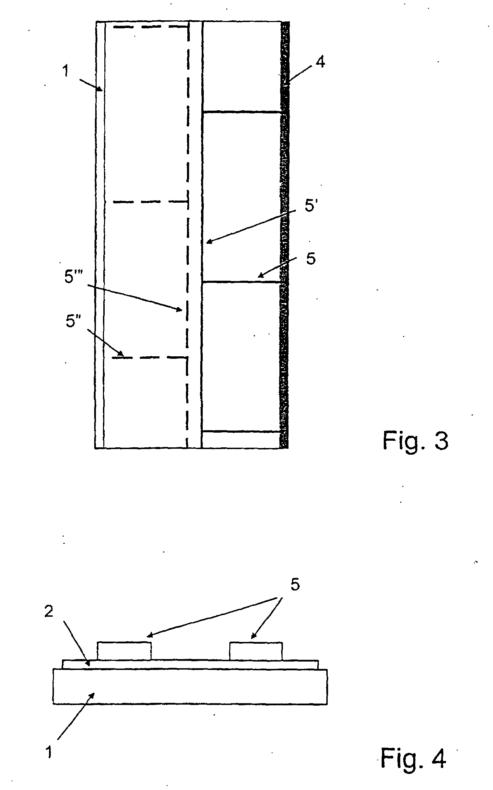

Die in der Fig. 1 dargestellte Folie weist eine linke Längskante 3 auf, entlang welcher die Trägerfolie 1 frei von der elektrisch leitenden Schicht 2 ist, der rechte Rand der Folie ist hingegen mit einem Hauptstrompfad 4 versehen. Über die gesamte Länge dieses Hauptstrompfades wird die Kondensatorfolie von aussen kontaktiert und gespiesen. Vom Hauptstrompfad 4 zweigen im rechten Winkel verlaufende Nebenstrompfade 5 ab, die zueinander parallel orientiert sind und unter einem regelmäßigen Abstand a angeordnet sind. Die sich aus den Haupt- 4 und Nebenstrompfaden 5 zusammensetzende Strompfadstruktur besitzt einen geringeren elektrischen Flächenwiderstand als die elektrisch leitende Schicht 2, da sie eine größere Dicke aufweist als die Schicht 2. Dies wird insbesondere aus der Darstellung in Figur 4 deutlich, auf die nachfolgend noch Bezug genommen wird.

Die elektrisch leitende Schicht 2 und die Haupt- und Nebenstrompfade 4, 5 können aus einer einzigen Metallbeschichtung ausgebildet sein und sich nur durch die Dicke unterscheiden. Die vorzugsweise als Metallschicht ausgebildete elektrisch leitende Schicht 2 und die Strompfade 4, 5 können jedoch auch aus unterschiedlichen Metallen bestehen. Es ist z.B. zweckmäßig die Schicht 2 aus Zink und die Hauptund Nebenstrompfade 4, 5 aus Aluminium auszubilden, denn durch die höhere Leitfähigkeit von Aluminium kann die Dicke der Haupt- und Nebenstrompfade 4, 5 gering gehalten werden. Anstelle von durch Metallisieren hergestellter Strompfade können auch aus einer Metallfolie bestehende Haupt- und Nebenstrompfade 4, 5 eingesetzt werden.

Die Haupt- und Nebenstrompfade 4, 5 sind vorzugsweise derart angeordnet, daß die elektrisch leitende Schicht 2 in mehrere Teilbereiche 6 unterteilt ist, deren Ausdehnung zumindest in einer Richtung begrenzt ist, so daß die in der Schicht 2 gespeicherte Ladung über einen kurzen Weg an die Haupt- und Nebenstrompfade 4, 5 abgeleitet werden kann. Bei dem in Fig. 1 dargestellten Ausführungsbeispiel sind die Nebenstrompfade 5 mit einem Abstand a voneinander beabstandet, so daß jeder Punkt der Schicht 2 nicht weiter als a/2 von dem nächsten Strompfad entfernt ist. Hierdurch ist der Weg, über den die in der Schicht 2 gespeicherte Ladung zu einem Strompfad geleitet wird, auf a/2 begrenzt. Die Form der zwischen den Strompfaden 5 ausgebildeten Teilbereiche 6 kann an sich beliebig gewählt werden, z.B. streifenförmig, quadratisch, rautenförmig, usw.

Der Flächenwiderstand der elektrisch leitenden Schicht 2 sollte zumindest 5 Ω und vorzugsweise mehr als 20 Ω betragen. Je höher der Flächenwiderstand ist, desto geringer sind die bei einem elektrischen Durchschlag zerstörten Flächenbereiche der die Kondensatorelektroden bildenden Schichten 2.

Bei den eingangs beschriebenen, herkömmlichen segmentierten Elektroden sind nach einem elektrischen Durchbruch in der Regel ganze Segmente mit einer Größe von mehr als 1 cm² unbrauchbar. Bei der vorliegenden Wahl einer Elektrode mit einem hohen Flächenwiderstand kann die pro elektrischen Durchschlag verdampfte Fläche auf weniger als 1 mm². begrenzt sein. Hierdurch beeinträchtigen elektrische Durchschläge vergleichsweise weniger die elektrische Kapazität des Folienkondensators, weshalb die Degradation oder durchschlagsbedingte Alterung des Kondensators gering ist.

Um einer übermässigen Erwärmung der dünnen Elektrode im Betrieb vorzubeugen, ist eine auf der Elektrodenschicht aufliegende Strompfadstruktur zur Reduktion des Flächengesamtwiderstandes vorgesehen. Je kleiner dabei der Flächenwiderstand eines einzelnen Strompfades ist, desto geringer kann der Überdeckungsgrad der Elektrode gewählt werden, ohne dass dabei die Reduktion des Flächengesamtwiderstandes von Elektrode und Strompfadstruktur gefährdet ist. Ein kleiner Überdeckungsgrad wiederum bedeutet eine maximale Ausdehnung der dünn beschichteten selbstheilenden Elektrodenfläche, d.h einen minimalen Einfluss der Strompfade auf die Selbstheilungsqualitäten der Elektrode. Eine anzustrebende Überdeckung von weniger als 10% der verbleibenden Elektrodenfläche wird entsprechend durch wenige und/oder schmale Nebenstrompfade erreicht.Bei einem typischen Beispiel der erfindungsgemäßen Kondensatorfolie beträgt der Flächenwiderstand der elektrisch leitenden Schicht 70 Ω und der Flächenwiderstand der Strompfade 0,5 Ω. Hieraus ergibt sich bei einem Abstand a von 3 cm, einer Nebenstrompfadbreite von 0.1 cm und einer Folienbreite b von 15 cm ein über verschiedene Richtungen in der Elektrodenfläche gemittelter Flächengesamtwiderstand von 22 Ω.

Der eingangs erläuterte Folienkondensator mit segmentierten Elektroden weist bspw. innerhalb eines jeden Teilbereiches einen Flächenwiderstand von 7 Ω auf. Durch die schmalen Strombrücken wird der Flächengesamtwiderstand um etwa das 3,4-fache erhöht, so daß er 24 Ω beträgt. Obwohl der *lokale* Flächenwiderstand beim bekannten Folienkondensator wesentlich geringer als beim erfindungsgemäßen Kondensator ist, ist der Flächengesamtwiderstand der erfindungsgemäßen Folie geringer als derjenige der Folie des bekannten Kondensators.

Da der Kapazitätsverlust und die Alterung aufgrund von elektrischen Durchschlägen um so stärker sind, je geringer der lokale Flächenwiderstand ist, und die elektrischen Eigenschaften um so besser sind, je geringer der Flächengesamtwiderstand ist, sind die erfindungsgemäße Folie und ein aus der erfindungsgemäßen Folie ausgebildeter Kondensator sowohl bzgl. der Alterung als auch bzgl. ihrer elektrischen Eigenschaften optimiert.

Obenstehend ist ein Beispiel mit einem Abstand a der Nebenstrompfade von 3 cm und einer Breite der Folie von 15 cm angegeben. Der Abstand a kann im Bereich von 2 bis 15 cm und die Breite b im Bereich von 3 bis 30 cm variieren. Die Breite der Nebenstrompfade 5 beträgt weniger als 10 mm und vorzugsweise weniger als 3 mm.

Sind sowohl die elektrisch leitende Schicht 2 als auch die Haupt- und Nebenstrompfade 4, 5 aus Zink ausgebildet, so weist die Schicht 2 eine Dicke von kleiner als 200 Å und die Strompfade eine Dicke von mehr als 4000 Å auf. Sind die auf der Trägerfolie 1 aufgebrachte elektrisch leitende Schicht 2 aus Zink und die Haupt- und Nebenstrompfade 4, 5 aus Aluminium oder einer Zink/Aluminium-Legierung ausgebildet, so weist die elektrisch leitende Schicht 2 eine Dicke von kleiner als 200 Å und die Strompfade eine Dicke von mehr als 2700 Å auf. Wie dargestellt ist nach Möglichkeit ein Flächenwiderstandsverhältnis von mehr als 20 anzustreben.

Fig. 2 zeigt eine weiteres Ausführungsbeispiel der erfindungsgemäßen Folie 1 für Folienkondensatoren. Dieses Folie entspricht im wesentlichen der in Fig. 1 gezeigten Folie, weshalb gleiche Elemente mit gleichen Bezugszeichen bezeichnet sind. Sie unterscheidet sich von dieser dadurch, daß im Anbindungsbereich der Nebenstrompfade 5 an den Hauptstrompfad 4 eine als Sicherung dienende Verjüngungsstelle 7 vorgesehen ist. Diese dient als zusätzliche Sicherung im Falle eines nicht selbstheilenden elektrischen Durchbruchs im Bereich des Strompfades 5.

Ein erfindungsgemäßer Kondensator wird entweder aus zwei einseitig mit einer Metallschicht beschichteten Trägerfolien gewickelt, wobei die beiden Metallschichten jeweils eine Elektrode bilden und die aus Kunststoff bestehende Trägerfolie als dielektrische Isolierung dient, oder er wird aus einer zweiseitig mit einer Metallschicht beschichteten Trägerfolie und einer unbeschichteten Folie gewickelt, wobei die beiden Metallschichten die Elektroden bilden und die zusätzliche unbeschichtete Folie als Isolator dient. Unabhängig von der Art, wie der Kondensator und aus welchen Folien er gewickelt ist, ergibt sich im Querschnitt eine Folge von Lagen, die jeweils aus einem dielektrisch isolierenden Kunststoffmaterial und einer als Elektrode fungierenden Metallschicht bestehen.

In mehrlagigen Folienkondensatoren gilt es zu vermeiden, dass es zwischen den Strompfaden aufeinanderfolgender Lagen zu elektrischen Durchbrüchen kommt, die nicht selbstheilend sein könnten. Dazu ist es ausreichend, wenn die Haupt- und Nebenstrompfade 4, 5 aufeinanderfolgender Lagen nicht genau übereinander sondern zueinander versetzt angeordnet sind. Dies bedingt unter anderem eine ausreichende Abstimmung zwischen Wicklungsprozesses und Strompfadstrukturen.

Vorgängig an den Wicklungsprozess wird vorteilhafterweise auf jeder zweiten einfach beschichteten Folie beziehungsweise auf der Rückseite jeder doppelt beschichteten Folie der Hauptstrompfad am entgegengesetzten Folienrand vorgesehen. Dann gehen die in Fig. 1 gezeigten Nebenstrompfade abwechslungsweise vom rechten und linken Rand aus und reichen jeweils bis in einen von den Nebenstrompfaden der Gegenelektrode definierten Teilbereich 6 hinein.

Fig. 3 zeigt eine Ansicht, bei der ein zusätzlicher Nebenstrompfad 5' parallel zum Hauptstrompfad innerhalb der Folie verläuft. Die Nebenstrompfade 5 verbinden den Nebenstrompfad 5' mit dem Hauptstrompfad 4. Gestrichelt sind die Nebenstrompfade 5", 5'" der rückseitigen Gegenelektrode dargestellt. Da bei diesem Ausführungsbeispiel die Strompfadstrukturen auf jeweils eine Hälfte der Folie beschränkt sind, kommt es unter keinen Umständen zu einer Überlagerung.

Die Figur 4 zeigt eine Querschnittsdarstellung durch die erfindungsgemäß ausgebildete Folie. Auf der Trägerfolie 1 wird mit an sich bekannten Beschichtungstechniken eine elektrisch leitende Schicht 2 aufgebracht, die wie im vorstehenden Ausführungsbeispiel gezeigt, als Metallschicht ausgebildet ist. Selbstverständlich können auch elektrisch leitfähige Kunststoffe für die elektrisch leitfähige Schicht 2 eingesetzt werden.

Unmittelbar an der Oberfläche der elektrisch leitenden Schicht 2 angrenzend sind über die Oberfläche erhabene Strompfadstrukturen in Form von Haupt- und Nebenstrompfaden 4, 5 vorgesehen, die entweder einstückig mit der elektrisch leitenden Schicht 2 gebildet oder nachträglich auf die Schicht 2 aufgebracht werden. In jedem Falle sind die Strompfadstrukturen vorzugsweise als auf der Oberfläche verlaufende Streifen 4, 5 ausgebildet und elektrisch leitend mit der Schicht 2 verbunden. Durch die Erhabenheit der als Streifen ausgebildeten Haupt- und Nebenstrompfade 4, 5 ist ihre Dicke vergrößert, wodurch der elektrische Flächenwiderstand gegenüber dem Widerstand innerhalb der elektrisch leitenden Schicht 2 reduziert wird.

Die Erfindung ist oben anhand von mehreren Ausführungsbeispielen näher erläutert worden; die Erfindung ist jedoch nicht auf diese Ausführungsbeispiele beschränkt. Im Rahmen der Erfindung kann die Trägerfolie aus Polypropylen, Polystyrol, Polyester, Polykarbonat, PET, PEN, Celluloseacetat oder Lackfolie ausgebildet sein; die Metallschicht und die Strompfade können aus Zink, Aluminium, Silber, Gold, Kupfer, Magnesium oder einer Legierung aus mehreren dieser Metalle ausgebildet sein; anstelle der hochohmigen Metallschicht kann auch eine elektrisch leitende Kunststoffschicht vorgesehen werden. Die Form der Folie muß nicht streifenförmig sein, sondern kann je nach Bedarf eine beliebige Form annehmen.

Die Strompfade, insbesondere die Nebenstrompfade, können mit einem Gradienten in ihrem Widerstandswert ausgebildet sein. Dieser Widerstandsgradient kann durch eine Änderung der Zusammensetzung, der Breite und/oder der Dicke des bzw. der Strompfade vorgesehen werden. Vorzugsweise sind die Nebenstrompfade 5 mit einem sich in Richtung zum jeweiligen Hauptstrompfad 4 verringernden Widerstandswert ausgebildet. In diesen Fällen bezieht sich das anzustrebende Flächenwiderstandsverhältnis zwischen Strompfadstruktur und Elektrodenschicht auf die dickste Stelle der Nebenstrompfade.

### Bezugszeichenliste

- 1: Trägerfolie
- 2: elektrisch leitende Schicht
- 3: Längskante
- 4: Hauptstrompfad
- 5: Nebenstrompfad
- 6: Teilbereich
- 7: Verjüngungsstelle

## Patentansprüche

1. Folie für einen Folienkondensator, mit einer als Dielektrikum ausgebildeten, elektrisch isolierenden Trägerfolie (1) und einer darauf aufgebrachten elektrisch leitenden Schicht (2), die als Elektrode dient und zur Verringerung von durchschlagsbedingten Kapazitätsverlusten einen hohen Flächenwiderstand aufweist, wobei auf der Schicht (2) mindestens eine Strompfadstruktur ausgebildet ist, wobei die Strompfadstruktur wenigstens einen Hauptstrompfad (4) und mehrere Nebenstrompfade (5) aufweist, die von dem bzw. den Hauptstrompfaden (4) abzweigen,
**dadurch gekennzeichnet, daß** zur Reduktion des Flächengesamtwiderstandes die Nebenstrompfade (5) an ihrer dicksten Stelle einen mehr als 20 mal geringeren Flächenwiderstand als die elektrisch leitende Schicht (2) aufweisen.

2. Folie nach Anspruch 1,
**dadurch gekennzeichnet, daß** der Flächenwiderstand der elektrisch leitenden Schicht (2) mindestens 5 Ω und vorzugsweise mehr als 20 Ω beträgt.

3. Folie nach Anspruch 1,
**dadurch gekennzeichnet, dass** die Nebenstrompfade maximal 10 Prozent der elektrisch leitenden Schicht (2) überdecken.

4. Folie nach einem der Ansprüche 1 bis 3,
**dadurch gekennzeichnet, daß** die Folie streifenförmig ausgebildet ist und sich der mindestens eine Hauptstrompfad (4) entlang einer Längskante (3) der Folie erstreckt.

5. Folie nach einem der Ansprüche 1 bis 3,
**dadurch gekennzeichnet, daß** die Strompfadstruktur mindestens eine als Sicherung dienende Verjüngungsstelle (7) aufweist.

6. Folienkondensator mit Elektroden sowie einem Dielektrikum,
**dadurch gekennzeichnet, daß** zumindest eine Elektrode sowie das Dielektrikum des Folienkondensators durch eine Folie nach einem der Ansprüche 1 bis 5 ausgebildet ist.

7. Folienkondensator nach Anspruch 6,
**dadurch gekennzeichnet, daß** der Kondensator entweder aus zwei einseitig mit einer elektrisch leitenden Schicht (2) beschichteten Trägerfolien (1) ausgebildet ist, wobei die beiden elektrisch leitenden Schichten (2) jeweils eine Elektrode bilden und die Trägerfolien (1) als dielektrische Isolierung dienen, oder aus einer zweiseitig mit einer elektrisch leitenden Schicht (2) beschichteten Trägerfolie (1) und einer unbeschichteten Folie gewickelt ist, wobei sich im Querschnitt eine Folge von Lagen ergibt, die abwechslungsweise aus elektrisch isolierendem Material und einer als Elektrode dienenden elektrisch leitenden Schicht besteht.

8. Folienkondensator nach Anspruch 7,
**dadurch gekennzeichnet, daß** die Haupt- und Nebenstrompfade (4, 5 bzw. 4', 5') zweier benachbarter Lagen zueinander versetzt angeordnet sind.

## Claims

1. Film for a film capacitor, having an electrically insulating carrier film (1) designed as a dielectric, and an electrically conductive layer (2) which is applied on said carrier film and serves as an electrode and has a high sheet resistance in order to reduce breakdown-dictated capacitance losses, at least one current path structure being formed on the layer (2), the current path structure having at least one main current path (4) and a plurality of auxiliary current paths (5), which branch off from the main current path(s) (4),
**characterized in that** in order to reduce the total sheet resistance, the auxiliary current paths (5) have, at their thickest point, a sheet resistance more than 20 times lower than the electrically conductive layer (2).

2. Film according to Claim 1,
**characterized in that** the sheet resistance of the electrically conductive layer (2) is at least 5 Ω and preferably more than 20 Ω.

3. Film according to Claim 1,
**characterized in that** the auxiliary current paths cover a maximum of 10 per cent of the electrically conductive layer (2).

4. Film according to Claims 1 to 3,
**characterized in that** the film is designed in strip form and the at least one main current path (4) extends along a longitudinal edge (3) of the film.

5. Film according to one of Claims 1 to 3,
**characterized in that** the current path structure has at least one tapering point (7) serving as protection device.

6. Film capacitor having electrodes and also a dielectric,
**characterized in that** at least one electrode and also the dielectric of the film capacitor are formed by a film according to one of Claims 1 to 5.

7. Film capacitor according to Claim 6,
**characterized in that** the capacitor is either formed from two carrier films (1) which are coated on one side with an electrically conductive layer (2), the two electrically conductive layers (2) each forming an electrode and the carrier films (1) serving as dielectric insulation, or is wound from a carrier film (1), which is coated on two sides with an electrically conductive layer (2), and an uncoated film, resulting, in cross section, in a sequence of layers which alternately comprises electrically insulating material and an electrically conductive layer serving as electrode.

8. Film capacitor according to Claim 7,
**characterized in that** the main and auxiliary current paths (4, 5 and 4', 5') of two adjacent layers are arranged offset with respect to one another.

## Revendications

1. Film pour condensateur à film, avec un film porteur isolateur d'électricité (1) configuré comme un diélectrique et une couche conductrice d'électricité (2) appliquée dessus, qui sert d'électrode et présente aux fins de réduire les pertes de capacité dues à des claquages une résistance surfacique élevée, au moins une structure de circuits de courant étant formée sur la couche (2), la structure de circuits de courant présentant au moins un circuit principal de courant (4) et plusieurs circuits accessoires de courant (5) qui se ramifient à partir du ou des circuits principaux de courant (4),
**caractérisé en ce que**, aux fins de réduire la résistance surfacique globale, les circuits accessoires de courant (5) présentent à leur emplacement le plus épais une résistance surfacique plus de 20 fois plus faible que la couche conductrice d'électricité (2).

2. Film selon la revendication 1,
**caractérisé en ce que** la résistance surfacique de la couche conductrice d'électricité (2) est d'au moins 5 Ω et de préférence de plus de 20 Ω.

3. Film selon la revendication 1,
**caractérisé en ce que** les circuits accessoires de courant recouvrent au maximum 10 pour-cent de la couche conductrice d'électricité (2).

4. Film selon une des revendications 1 à 3,
**caractérisé en ce que** le film est configuré en forme de bande et que le circuit principal de courant (4) présent en au moins un exemplaire s'étend le long d'un bord longitudinal (3) du film.

5. Film selon une des revendications 1 à 3,
**caractérisé en ce que** la structure de circuits de courant présente au moins un emplacement rétréci (7) servant de sécurité.

6. Condensateur à film comportant des électrodes ainsi qu'un diélectrique,
**caractérisé en ce qu'**au moins une électrode ainsi que le diélectrique du condensateur à film sont formés par un film selon une des revendications 1 à 5.

7. Condensateur à film selon la revendication 6,
**caractérisé en ce que** le condensateur soit est réalisé par deux films porteurs (1) revêtus unilatéralement par une couche conductrice d'électricité (2), les deux couches conductrices d'électricité (2) formant respectivement une électrode et les films porteurs (1) servant d'isolation diélectrique, soit est enveloppé d'un film porteur (1) revêtu bilatéralement par une couche conductrice d'électricité (2) et d'un film non revêtu, une succession de couches apparaissant en section transversale, qui consiste alternativement en matière isolatrice d'électricité et en une couche conductrice d'électricité servant d'électrode.

8. Condensateur à film selon la revendication 7,
**caractérisé en ce que** les circuits principaux et accessoires de courant (4, 5 ou 4', 5') de deux couches adjacentes sont décalés l'un par rapport à l'autre.
